# EUROPEAN PATENT APPLICATION

(11) **EP 0 919 441 A2**
(43) Date of publication of application: **02.06.1999**
(21) Application number: 98122178.1
(22) Date of filing: 26.11.1998
(51) Int. Cl.: B60R 22/36

(54) **Vehicle occupant restraint**

(30) Priority: 26.11.1997 US 979415
(71) Applicant: TRW VEHICLE SAFETY SYSTEMS INC., Lyndhurst Ohio 44124 (US)
(72) Inventor: Malinow, Ivanna G., Macomb Township, Michigan 48044 (US)
(74) Representative: Wagner, Karl H., Dipl.-Ing.

(57) **Abstract**

A vehicle occupant restraint (12) includes a length of seat belt webbing (16) extensible about a vehicle occupant and a member (140) to control the location of the seat belt webbing (16) in a vehicle. The member (140) includes a metal base portion (142) and a material layer (160) on the metal base portion (142) which converts vibration of the member (140) into heat by shearing action in the material layer (160), thereby to damp at least a portion of audible noise generated by the member (140).

## Description

### Background of the Invention

### Technical Field

The present invention relates to a vehicle occupant restraint having seat belt webbing and a member for controlling the location of the seat belt webbing in the vehicle.

### Description of the Prior Art

A known seat belt system includes a length of seat belt webbing wound on a spool of a retractor. The belt webbing is extensible about a vehicle occupant to help protect the occupant in the event of a vehicle collision. The retractor includes a pair of ratchet wheels fixed for rotation with the spool and a pivotable lock pawl. The lock pawl is pivotable from an unlocked position to a locked position by a collision sensing device. In the locked position, the lock pawl engages teeth on the ratchet wheels to prevent payout of the seat belt webbing. The lock pawl may vibrate, generating audible noise which may be objectionable to the vehicle occupant.

### Summary of the Invention

The present invention is a vehicle occupant restraint comprising a length of seat belt webbing extensible about a vehicle occupant and a member to control the location of the seat belt webbing in a vehicle. The member comprises a metal base portion and at least one material layer on the metal base portion which converts vibration of the member into heat by shearing action in the at least one material layer, thereby to damp at least a portion of audible noise generated by the member.

In accordance with a preferred embodiment of the present invention, the member comprises a pawl for locking the seat belt webbing to block a change in the location of the seat belt webbing. The metal base portion of the pawl is made of steel. The at least one material layer comprises a viscoelastic material which is an acrylic polymer. A layer of aluminum overlies the viscoelastic material.

### Brief Description of the Drawings

Further features of the present invention will become apparent to one skilled in the art to which the present invention relates from reading the following specification with reference to the accompanying drawings, in which:
Fig. 1 in a schematic illustration of a vehicle seat belt system including a seat belt webbing retractor constructed in accordance with the present invention;
Fig. 2 is an exploded perspective view of the retractor of Fig. 1; and
Fig. 3 is an enlarged exploded perspective view of a portion of Fig. 2.

### Description of a Preferred Embodiment

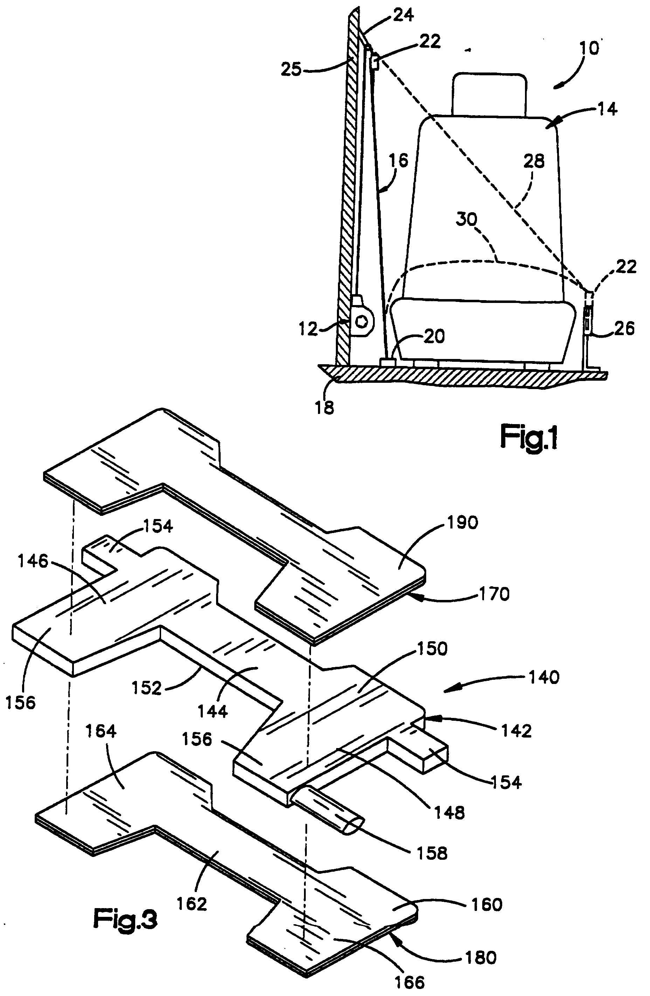

The present invention relates to a vehicle occupant restraint including seat belt webbing and a member for controlling the location of the seat belt webbing in the vehicle. The present invention is applicable to seat belt systems of various constructions. As representative of the present invention, Fig. 1 illustrates a three-point continuous loop seat belt system 10 for use in restraining an occupant of a vehicle.

The occupant of the vehicle sits on a vehicle seat 14 which is illustrated as a front passenger seat in the vehicle. A length of seat belt webbing 16 is extensible about the vehicle occupant. One end of the length of belt webbing 16 is anchored to the vehicle body 18 at an anchor point 20 located on one side of the seat 14. The opposite end of the belt webbing 16 is attached to a retractor 12 which is secured to the vehicle body 18 on the same side of the seat 14. Intermediate its ends, the belt webbing 16 passes through a tongue assembly 22 and a D-ring or turning loop 24 that is mounted to a B-pillar 25 above the retractor 12 and the anchor point 20. When the seat belt system 10 is not in use, the belt webbing 16 is wound on the retractor 12 and is oriented generally vertically on the one side of the seat 14, as shown in solid lines in Fig. 1.

To engage the seat belt system 10, the tongue assembly 22 is manually grasped and is pulled across the lap and torso of the occupant sitting in the seat 14. As the tongue assembly 22 is pulled across the lap and torso of the occupant, the tongue assembly moves along the belt webbing 16, and the belt webbing is unwound from the retractor 12. When the belt webbing 16 has been pulled across the lap and torso of the occupant, the tongue assembly 22 is connected with a buckle 26, as shown in dashed lines in Fig. 1. The buckle 26 is connected to the vehicle body 18 and is disposed on the side of the seat 14 opposite the anchor point 20. When the seat belt system 10 is thus buckled, the length of belt webbing 16 is divided by the tongue assembly 22 into a torso portion 28 which extends across the torso of the occupant and a lap portion 30 which extends across the lap of the occupant.

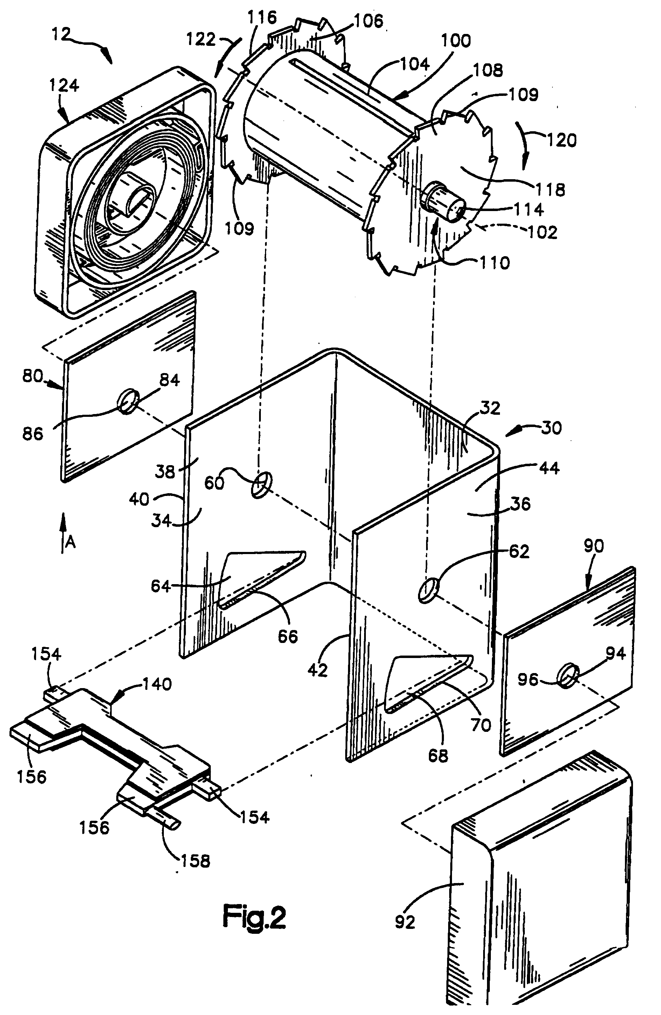

The retractor 12 (Fig. 2) includes a frame 30 which is fixed to the vehicle body 18 in a manner not shown. The frame 30 is a single piece of sheet metal and has a U-shaped configuration. The frame 30 includes a back wall 32 and spaced parallel side walls 34 and 36 which extend generally perpendicular to the back wall. The first side wall 34 has an inner side surface 38 and an outer side surface 10. The second side wall 36 has an inner side surface 42 and an outer side surface 44.

A circular first shaft opening 60 is formed in the first side wall 34 of the frame 30. A circular second shaft opening 62, identical to the shaft first opening 60, is formed in the second side wall 36. A wedge-shaped first lock pawl opening 64 is located in the first side wall 34 underneath the first shaft opening 60. The first lock pawl opening 64 is defined in part by a lower surface portion 66. A wedge-shaped second lock pawl opening 68 is located in the second side wall 36 underneath the second shaft opening 62. The second lock pawl opening 68 is defined in part by a lower surface portion 70. The first lock pawl opening 64 in the first side wall 34 is aligned with the second lock pawl opening 68 in the second side wall 36.

A spring plate 80 is attached in a manner not shown to the outer side surface 40 of the first side wall 34 of the frame. The spring plate 80 has a cylindrical surface 84 which defines a circular third shaft opening 86 in the spring plate. The third shaft opening 86 in the spring plate 80 overlies the first shaft opening 60 in the first side wall 34 of the frame 30. The diameter of the third shaft opening 86 in the spring plate 80 is less than the diameter of the first shaft opening 60 in the first side wall 34 of the frame 30.

A sensor plate 90 is attached in a manner not shown to the second side wall 36 of the frame 30. The sensor plate 90 as illustrated is identical in configuration to the spring plate 80. The sensor plate 90 has a cylindrical surface 94 which defines a circular fourth shaft opening 96 in the sensor plate. The fourth shaft opening 96 in the sensor plate 90 overlies the second shaft opening 62 in the second side wall 36 of the frame 30. The diameter of the fourth shaft opening 96 in the sensor plate 90 is less than the diameter of the second shaft opening 62 in the second side wall 36 of the frame 30.

A known sensor mechanism (not shown) for sensing sudden vehicle deceleration, such as occurs in a vehicle collision, is fixed to the sensor plate 90. The sensor mechanism projects outwardly from the sensor plate 90, in a direction away from the frame side wall 36. A sensor cover 92 encloses the sensor mechanism.

The retractor 12 includes a spool 100 which has a longitudinal central axis 102. The spool 100 includes a sleeve 104 on which the belt webbing 16 is wound. The sleeve 104 has a cylindrical configuration centered on the axis 102.

First and second ratchet wheels 106 and 108 are disposed at opposite ends of the sleeve 104 and are fixed for rotation with the sleeve. A radially extending outer side surface 116 of the first ratchet wheel 106 faces the inner side surface 38 of the first side wall 34 of the frame 30. A radially extending outer side surface 118 of the second ratchet wheel 108 faces the inner side surface 42 of the second side wall 36 of the frame 30. A plurality of ratchet teeth 109 are disposed in a circular array on the outer periphery of each one of the spool locking ratchet wheels 106 and 108.

The spool 110 is fixed for rotation with a cylindrical metal retractor shaft 110. The shaft 110 has a longitudinal central axis which is coincident with the axis 102 of the spool 100. A first end portion (not shown) of the shaft 110 projects axially from the left end (as viewed in Fig. 2) of the sleeve 104. The first end portion of the shaft 110 extends through the first shaft opening 60 in the first side wall 34 of the frame 30 and through the third shaft opening 86 in the spring plate 80. The diameter of the first end portion of the shaft 110 is less than the diameter of the third shaft opening 86 in the spring plate 80.

A second end portion 114 of the retractor shaft 110 projects axially from the right end (as viewed in Fig. 2) of the sleeve 104. The second end portion 114 of the shaft 110 extends through the second shaft opening 62 in the second side wall 36 of the frame 30 and through the fourth shaft opening 96 in the sensor plate 90. The diameter of the second end portion 114 of the shaft 110 is less than the diameter of the fourth shaft opening 96 in the sensor plate 90.

The shaft 110 supports the spool 100 for rotation about the axis 102 in a belt retraction direction 120 and in an opposite belt withdrawal direction 122. A rewind spring mechanism 124 is fixed to the spring plate 80 and is connected with the first end portion of the shaft 110. The rewind spring mechanism 124 biases the spool 100 and the shaft 110 for rotation about the axis 102 in the belt retraction direction 120.

The retractor 12 further includes a pivotable lock pawl 140. The lock pawl 140 is disposed adjacent to and between the first and second ratchet wheels 106 and 108. The lock pawl 140 comprises a base member 142 (Fig. 3), first and second sound damping layers 160 and 170, and first and second constraining layers 180 and 190.

The base member 142 is made of metal, preferably hardened steel, and has a planar upper surface 150 and a planar lower surface 152. In accordance with the preferred embodiment of the present invention, the base member 142 has a nominal thickness of 2.67 millimeters. The base member 142 of the lock pawl 140 has an H-shape defined by a central portion 144 and first and second lateral portions 146 and 148. The base member 142 includes at its opposite ends a pair of axially extending pivot tabs 154. The pivot tabs 154 extend from the lateral portions 146 and 148 through the lock pawl openings 64 and 68, respectively, in the frame 30 to support the lock pawl 140 on the frame for pivotal movement relative to the frame.

A locking portion 156 is located at a tip of each of the lateral portions 146, 148 of the lock pawl 140. A cam tab 158 of the lock pawl 142 extends axially outward from one locking portion 156 through the lock pawl opening 68 in the second side wall 36 of the frame 30 in a direction away from the frame. The cam tab 158 is connected with the sensor mechanism so that in the event of vehicle deceleration above a predetermined level, the cam tab 158 is moved. The lock pawl 140 is pivoted by the movement of the cam tab 158 so that the locking portions 156 engage the ratchet wheels 106 and 108 to block rotation of the spool 100 in the belt withdrawal direction 122.

The first sound damping layer 160 lies on the lower surface 152 of the base member 142. The first sound damping layer 160 has a generally H-shaped configuration defined by a central portion 162 and a pair of lateral portions 164 and 166. The first sound damping layer 160 comprises a layer of viscoelastic material. In accordance with the preferred embodiment of the present invention, the viscoelastic material is an acrylic polymer with a preferred nominal thickness of 0.05 millimeters throughout its extent. A viscoelastic polymer other than an acrylic polymer could be used for the first sound damping layer 160.

The viscoelastic material comprising the first sound damping layer 160 is inherently adhesive and thus provides a means for attaching itself to the base member 142 when pressed onto the lower surface 152 of the base member. The first sound damping layer 160 covers substantially all of the lower surface 152 of the base member 142 of the lock pawl 140. However, as may be seen in Fig. 2, the first sound damping layer 160 does not cover the locking portions 156 or the tabs 154 and 158 of the base member 142.

The first constraining layer 180 of the lock pawl 140 overlies the first sound damping layer 160. The first constraining layer 180 has an identical shape to that of the first sound damping layer 160. In accordance with the preferred embodiment of the invention, the first constraining layer 180 is made of aluminum and has a nominal thickness of 0.13 millimeters. It is contemplated that another metal, such as stainless steel, could be used for the first constraining layer 180. The first constraining layer 180 is attached to the first sound damping layer 160 by the adhesive nature of the viscoelastic material comprising the first sound damping layer.

The second sound damping layer 170 lies on and is adhered to the upper surface 150 of the base member 142. The second sound damping layer 170 is made of the same material as the first sound damping layer 160. Further, the second sound damping layer 170 is identical in shape and thickness to the first sound damping layer 160. The second sound damping layer 170 thus covers substantially all of the upper surface 150 of the base member 142 except for the locking portions 156 and the tabs 154 and 158.

The second constraining layer 190 overlies and is adhered to the second sound damping layer 170 of the lock pawl 140. The second constraining layer 190 is identical in shape, thickness, and material to the first constraining layer 180.

In the preferred embodiment of the invention, the first sound damping layer 160 and the first constraining layer 180 are pre-assembled to one another, and the second sound damping layer 170 and the second constraining layer 190 are pre-assembled to one another. This pre-assembled form of the sound damping layers 160, 170 and the constraining layers 180, 190 is commercially available from the 3M Company as SCOTCHDAMP brand sound damping material.

The lock pawl 140 in the retractor 12 is movable between a locked position and an unlocked position. The lock pawl 140 is pivoted to the locked position by the sensor mechanism in the event of vehicle deceleration above a predetermined level. The lock pawl 140 pivots in an upward direction as indicated by arrow A in Fig. 2. In the locked position, the locking portions 156 of the lock pawl 140 are engaged with teeth of the ratchet wheels 106 and 108, thereby preventing rotation of the spool 100 in the belt withdrawal direction 122. Thus, the lock pawl 140 in the locked position blocks a change from occurring in the location of the seat belt webbing 16 about the occupant.

Under normal driving conditions, the lock pawl 140 is in the unlocked position. In the unlocked position, the locking portions 156 of the lock pawl 140 are not engaged with the ratchet wheels 106, 108 and rotation of the spool 100 is not blocked. The lock pawl 140 in the unlocked position lies substantially in a horizontal plane with the tabs 154, 158 resting on the lower surface portions 66 and 70 of the lock pawl openings 64 and 68, respectively.

When the lock pawl 140 is in the unlocked position, the lock pawl is subjected to a variety of vibrational inputs due to vibration of the vehicle. The vibrational inputs can cause the lock pawl 140 to vibrate. Vibration of the lock pawl 140 in ambient air generates audible noise which can be objectionable to the vehicle occupant. Further, vibration of the lock pawl 140 against adjoining surfaces of the frame 30, such as the lower surface portions 66 and 70, generates audible noise which can be objectionable to the vehicle occupant.

When such vibration of the lock pawl 140 occurs, the first and second sound damping layers 160 and 170 on the lock pawl damp a portion of the audible noise generated by the vibration of the pawl. The viscoelastic material of the first and second sound damping layers 160 and 170 attenuates the high frequency portion of the audible sound (approximately 6 KHz and above).

This sound attenuation takes place because the viscoelastic material of the first and second sound damping layers 160 and 170 converts vibrational energy into heat through shearing action. Vibration of the lock pawl 140 generates sound waves which propagate over the surfaces 150, 152 of the base member 142. As the sound waves travel across the surfaces 150, 152 of the base member 142 of the lock pawl 140, shearing action in the viscoelastic material occurs in a direction generally perpendicular to the surfaces 150, 152. The shearing action generates heat to dissipate the vibrational energy causing the audible sound.

The aluminum material of the first and second constraining layers 180 and 190 of the lock pawl 140 protects the viscoelastic material of the first and second sound damping layers 160 and 170, respectively, from exposure to dirt or dust.

It is contemplated that the present invention could also be applied to a height adjuster for vehicle seat belt webbing. The sound damping layer and the constraining layer described above could be applied to the rail or locking pawl of a height adjuster to attenuate high frequency sound which can occur during adjustment of the height adjuster or due to vibration of a pawl in the height adjuster.

From the above description of the invention, those skilled in the art will perceive improvements, changes and modifications in the invention. For example, the lock pawl 140 could have a sound damping layer and a constraining layer applied to only one surface, such as the upper surface 150. Further, multiple layers of sound damping material and constraining material could be applied to a surface on the lock pawl 140. Such improvements, changes and modifications within the skill in the art are intended to be covered by the appended claims.

According to its broadest aspect the invention relates to a vehicle occupant restraint comprising: a length of seat belt webbing extensible about a vehicle occupant; and a member to control the location of said seat belt webbing in a vehicle.

It should be noted that the objects and advantages of the invention may be attained by means of any compatible combination(s) particularly pointed out in the items of the following summary of the invention and the appended claims.

### SUMMARY OF THE INVENTION

1. A vehicle occupant restraint comprising:
   a length of seat belt webbing extensible about a vehicle occupant; and
   a member to control the location of said seat belt webbing in a vehicle,
      said member comprising a metal base portion having at least one material layer which converts vibration of said member into heat by shearing action in said at least one material layer, thereby to damp at least a portion of audible noise generated by vibration of said member.
2. The vehicle occupant restraint wherein said member comprises a pawl for locking said length of seat belt webbing to block a change in the location of said the belt webbing.
3. The vehicle occupant restraint wherein said metal base portion is made of steel.
4. The vehicle occupant restraint wherein said at least one material layer comprises a viscoelastic material.
5. The vehicle occupant restraint wherein said viscoelastic material is an acrylic polymer.
6. The vehicle occupant restraint further comprising a layer of aluminum overlying said viscoelastic material.
7. The vehicle occupant restraint wherein said metal base portion has an upper surface covered in part by a first layer of said viscoelastic material and a lower surface covered in part by a second layer of said viscoelastic material.
8. The vehicle occupant restraint further comprising a spool on which said length of seat belt webbing is wound and a ratchet wheel attached to said spool, said spool being rotatable about an axis in a belt retraction direction and a belt withdrawal direction, said member comprising a pawl which is movable between a locked position and an unlocked position, said pawl in said locked position engaging said ratchet wheel to prevent rotation of said spool in said belt withdrawal direction.
9. The vehicle occupant restraint further comprising a support frame, said support frame supporting said pawl for movement in said frame, said audible noise being generated by vibration of said pawl in ambient air and by vibration of said pawl against said support frame when said pawl is in said unlocked position.
10. The vehicle occupant restraint wherein said metal base portion of said pawl is made of steel and has an upper surface and a lower surface.
11. The vehicle occupant restraint wherein said at least one material layer comprises a first layer of viscoelastic material attached to said upper surface of said base portion of said pawl and a second layer of said viscoelastic material attached to said lower surface of said base portion.
12. A vehicle occupant restraint comprising:
   a length of seat belt webbing extensible about a vehicle occupant; and
   a member to control the location of said seat belt webbing in a vehicle,
      said member comprising a steel base portion having a first metallic overlay and a first viscoelastic layer interposed between a first surface of said steel base portion and said first metallic overlay.
13. The vehicle occupant restraint wherein said member comprises a pawl for locking said length of seat belt webbing to block a change in the location of the seat belt webbing.
14. The vehicle occupant restraint wherein said first metallic overlay is made of aluminum.
15. The vehicle occupant restraint wherein said first viscoelastic layer is an acrylic polymer.
16. The vehicle occupant restraint wherein said steel base portion of said pawl further has a second metallic overlay and a second viscoelastic layer interposed between a second surface of said base portion and said second metallic overlay. interposed between a second surface of said base portion and said second metallic overlay.
17. The vehicle occupant restraint further comprising a spool on which said length of seat belt webbing is wound and a ratchet wheel attached to said spool, said spool being rotatable about an axis in a belt retraction direction and a belt withdrawal direction, said member comprising a pawl which is movable between a locked position and an unlocked position, said pawl in said locked position engaging said ratchet wheel to prevent rotation of said spool in said belt withdrawal direction.
18. The vehicle occupant restraint further comprising a support frame, said support frame supporting said pawl for pivotal movement in said frame, said first viscoelastic layer damping audible noise generated by said pawl due to vibration of said pawl in ambient air and due to vibration of said pawl against said support frame when said pawl is in said unlocked position.
19. The vehicle occupant restraint wherein said first metallic overlay is made of aluminum.
20. The vehicle occupant restraint wherein said first viscoelastic layer is an acrylic polymer.
21. The vehicle occupant restraint wherein said steel base portion of said pawl further has a second metallic overlay and a second viscoelastic layer interposed between a second surface of said base portion and said second metallic overlay, said first and second surfaces comprising parallel, upper and lower surfaces of said base portion.
22. The vehicle occupant restraint wherein said first and second viscoelastic layers convert vibration of said pawl into heat by shearing action in said viscoelastic layer to damp a portion of the noise generated by said pawl.

## Claims

1. A vehicle occupant restraint comprising:
a length of seat belt webbing extensible about a vehicle occupant; and
a member to control the location of said seat belt webbing in a vehicle,
said member comprising a metal base portion having at least one material layer which converts vibration of said member into heat by shearing action in said at least one material layer, thereby to damp at least a portion of audible noise generated by vibration of said member.

2. The vehicle occupant restraint of claim 1 wherein said member comprises a pawl for locking said length of seat belt webbing to block a change in the location of said the belt webbing.

3. The vehicle occupant restraint of claim 1 wherein said metal base portion is made of steel.

4. The vehicle occupant restraint of claim 1 wherein said at least one material layer comprises a viscoelastic material.

5. The vehicle occupant restraint of any of the preceding claims wherein said viscoelastic material is an acrylic polymer,
and/or further preferably comprising a layer of aluminum overlying said viscoelastic material,
and/or wherein preferably said metal base portion has an upper surface covered in part by a first layer of said viscoelastic material and a lower surface covered in part by a second layer of said yiscoelastic material.

6. The vehicle occupant restraint of any of the preceding claims further comprising a spool on which said length of seat belt webbing is wound and a ratchet wheel attached to said spool, said spool being rotatable about an axis in a belt retraction direction and a belt withdrawal direction, said member comprising a pawl which is movable between a locked position and an unlocked position, said pawl in said locked position engaging said ratchet wheel to prevent rotation of said spool in said belt withdrawal direction,
and/or further preferably comprising a support frame, said support frame supporting said pawl for movement in said frame, said audible noise being generated by vibration of said pawl in ambient air and by vibration of said pawl against said support frame when said pawl is in said unlocked position,
and/or wherein preferably said metal base portion of said pawl is made of steel and has an upper surface and a lower surface,
and/or wherein preferably
said at least one material layer comprises a first layer of viscoelastic material attached to said upper surface of said base portion of said pawl and a second layer of said viscoelastic material attached to said lower surface of said base portion.

7. A vehicle occupant restraint comprising:
a length of seat belt webbing extensible about a vehicle occupant; and
a member to control the location of said seat belt webbing in a vehicle,
said member comprising a steel base portion having a first metallic overlay and a first viscoelastic layer interposed between a first surface of said steel base portion and said first metallic overlay.

8. The vehicle occupant restraint of any of the preceding claims wherein said member comprises a pawl for locking said length of seat belt webbing to block a change in the location of the seat belt webbing,
and/or wherein preferably
said first metallic overlay is made of aluminum,
and/or wherein preferably
said first viscoelastic layer is an acrylic polymer,
and/or wherein preferably
said steel base portion of said pawl further has a second metallic overlay and a second viscoelastic layer interposed between a second surface of said base portion and said second metallic overlay.

9. The vehicle occupant restraint of any of the preceding claims further comprising a spool on which said length of seat belt webbing is wound and a ratchet wheel attached to said spool, said spool being rotatable about an axis in a belt retraction direction and a belt withdrawal direction, said member comprising a paw] which is movable between a locked position and an unlocked position, said pawl in said locked position engaging said ratchet wheel to prevent rotation of said spool in said belt withdrawal direction,
and/or further preferably
comprising a support frame, said support frame supporting said pawl for pivotal movement in said frame, said first viscoelastic layer damping audible noise generated by said pawl due to vibration of said pawl in ambient air and due to vibration of said pawl against said support frame when said pawl is in said unlocked position,
and/or wherein preferably
said first metallic overlay is made of aluminum,
and/or wherein preferably
said first viscoelastic layer is an acrylic polymer,
and/or wherein preferably
said steel base portion of said pawl further has a second metallic overlay and a second viscoelastic layer interposed between a second surface of said base portion and said second metallic overlay, said first and second surfaces comprising parallel, upper and lower surfaces of said base portion,
and/or wherein preferably
said first and second viscoelastic layers convert vibration of said pawl into heat by shearing action in said viscoelastic layer to damp a portion of the noise generated by said pawl.

10. A vehicle occupant restraint comprising:
a length of seat belt webbing extensible about a vehicle occupant; and
a member to control the location of said seat belt webbing in a vehicle.
